# EUROPEAN PATENT APPLICATION

(11) **EP 4 768 093 A1**
(43) Date of publication of application: **01.07.2026**
(21) Application number: 25220826.9
(22) Date of filing: 04.12.2025
(51) Int. Cl.: A63B 39/00, A63B 37/06

(54) **HOLLOW BALL STRUCTURE BASED ON SUPERCRITICAL PROCESS**

(30) Priority: 31.12.2024 CN 202411980856
(71) Applicant: Chuang, Chengming, 32072 Taoyuan (TW)
(72) Inventor: Chuang, Chengming, 32072 Taoyuan (TW)
(74) Representative: Izquierdo Blanco, Maria Alicia

(57) **Abstract**

The invention relates to the field of sporting goods, in particular to a hollow ball structure based on a supercritical process, which comprises a foamed ball core, a plurality of hollow cavities are formed inside or outside or inside and outside the foamed ball core, a reinforcing layer is arranged on the periphery of the foamed ball core, a ball surface patch layer is bonded to the periphery of the reinforcing layer, and the foamed ball core or/and the ball surface patch layer can be prepared by using a supercritical foaming process, which ensures the roundness consistency and excellent elasticity and restorability during processing, as well as the roundness consistency after impact of external forces.

## Description

### Technical Field

The invention relates to the field of sporting goods, in particular to a hollow ball structure based on a supercritical process.

### Background Art

In the prior art, most of the elastic balls or related balls in the field of sporting goods are designed as inflated structures. Although this design can meet the use requirements of the balls, there are some inherent deficiencies. First, it is necessary for the inflatable balls to check the gas pressure and inflate gas, which requires additional inflation equipment, increasing the user's inconvenience and additional costs; second, the elastic performance of the inflatable balls is often limited by the gas pressure and the choice of the ball material, many balls cannot be quickly restored to the original shape under the impact of external forces and have insufficient elasticity and restorability, resulting in failure to ensure the roundness consistency of the balls during use.

Meanwhile, the manufacturing process of the traditional balls usually includes multiple complex steps, such as material preparation, molding, inflation, sealing and testing. Each step requires precise control, and the processes are linked closely. Once a process goes wrong, rework may be required, resulting in overall low production efficiency.

For example, the inflating process and the subsequent deflating test are integral part of the ball manufacture, but these steps are relatively time-consuming. It is necessary for inflating to ensure that the pressure inside the ball is up to standard, and the deflating test is to verify the sealing performance of the ball, thereby increasing the overall manufacturing time. In addition, due to the tedious preparation process and long production time, more workers are required to cooperate in the traditional ball manufacturing to ensure the smooth operation of the production line. In the traditional ball manufacturing process, all processes consume energy, such as material heating, operation of forming equipment and energy consumption of inflating equipment. Long-time and large-scale production results in a lot of energy consumption, which is not conducive to energy conservation and environmental protection.

Specifically, the common sports balls on the market, such as basketball, football, etc., are mainly made of polyurethane (PU), polyvinyl chloride (PVC) or other rubber or rubber-plastic copolymer materials. These materials are limited by the traditional inflatable ball process in the preparation process, causing the inflatable balls to have deficiencies in elasticity, wear resistance and aging resistance. these inflatable balls cannot quickly restore to their original shape under impact of external forces, affecting the use effect and experience. In addition, due to the presence of gas inside the inflatable balls, gas may be gradually leaked once the balls are pierced by sharp objects such as shoe nails or under excessive pressure, making the balls lose their functionality. This design not only increases the risk of use, but also limits the application of the balls in some special environments.

Therefore, the sports balls in the prior art have deficiencies in elasticity and restorability, service life and maintenance convenience, and new structure and material are needed to improve and enhance.

### Summary of the Invention

To solve the above problems, the invention provides a hollow ball structure based on a supercritical process, a foamed ball core and a ball surface patch layer are prepared by a supercritical foaming process, so that the ball can restore to the original shape more quickly under external force. Moreover, the ball is hollow and does not need to be inflated, thereby avoiding the tedious process that the traditional inflatable ball needs to be checked for gas pressure and inflated; moreover, this improvement not only improves the user's convenience, but also avoids the overall cost increase caused by necessary inflation and maintenance of the inflatable ball as well as the stagnation caused by the inflation need during game.

To realize the above purpose, the invention adopts the following technical proposal: a hollow ball structure based on a supercritical process comprises a foamed ball core, a plurality of hollow cavities are formed inside or on the surface of the foamed ball core or inside and on the surface of the foamed ball core, a reinforcing layer is arranged outside the foamed ball core, a ball surface patch layer is bonded to the periphery of the reinforcing layer, and the foamed ball core or/and the ball surface patch layer are prepared by a supercritical foaming process.

As a further optimized proposal, the foamed ball core is at least one of polyurethane foamed ball core, EVA foamed ball core, TPE foamed ball core, SBR foamed ball core, NBR foamed ball core, EPDM foamed ball core, SBL foamed ball core, POE foamed ball core, PE foamed ball core, TPR foamed ball core, TPU foamed ball core and TPEE foamed ball core.

As a further optimized proposal, a film layer is bonded to the outer surface of the ball surface patch layer.

As a further optimized proposal, the foamed ball core is integrally foamed by the supercritical foaming process.

As a further optimized proposal, the foamed ball core is composed of a plurality of splicing bodies by means of splicing.

As a further optimized proposal, the reinforcing layer is a non-woven or woven fabric, which is bonded to the periphery of the foamed ball core by hot pressing or gluing.

As a further optimized proposal, the reinforcing layer is a winding layer, which is bonded with the periphery of the foamed ball core by gluing.

As a further optimized proposal, the ball surface patch layer is made of at least one of polyurethane, EVA, TPE, SBR, NBR, EPDM, SBL, POE, PE, TPR, TPU and TPEE and is foamed by the supercritical foaming process.

As a further optimized proposal, the thickness of the ball surface patch layer is 1 mm to 20 mm, and the thickness of the film layer is 0.1 mm to 3 mm, and the film layer is prepared from at least one of polyurethane, EVA, TPE, SBR, NBR, EPDM, SBL, POE, PE, TPR, TPU and TPEE.

As a further optimized proposal, an inner or outer layer of the film layer is provided with a printing layer by means of painting or printing or thermal transfer printing or water transfer printing or cold transfer printing or pad printing.

As a further optimized proposal, a groove is also arranged on the surface of the ball surface patch layer.

The invention has the following beneficial effects:
1. The foamed ball core and the ball surface patch layer are prepared by the supercritical foaming process, so that the ball can restore to its original shape more quickly under impact of external force. This improvement significantly improves the use experience and effect of the ball, and meets the requirements of athletes for high elasticity and high reaction speed of the ball in the continuous collision environment
2. The design of reinforcing layer and ball surface patch layer enhances the structural stability, wear resistance and appearance of the ball. The material prepared by the supercritical foaming process also has high durability and aging resistance, thus extending the service life of the ball and reducing the replacement frequency and use cost of the ball.
3. The ball of the invention is hollow and does not need to be inflated, thereby avoiding the tedious process that the traditional inflatable ball needs to be checked for gas pressure and inflated. This improvement not only improves the user's convenience, but also reduces the risk of ball damage due to improper maintenance. In addition, the hollow ball structure based on the supercritical process is also suitable for a variety of sports scenes and athlete needs, such as basketball, football, volleyball, etc., and has a wide range of application prospects.
4. Grooves can be arranged on the outermost surface of the ball surface patch layer according to actual needs. The grooves are exquisitely designed and have multiple functions: on the one hand, they can significantly reduce the friction of the ball with the ground or air during rotation on the ground and in the air, making the ball smoother and improving the excellent performance of the motion trajectory of the ball; on the other hand, the grooves also have the function of facilitating drainage, and can effectively prevent water from affecting the maneuverability and trajectory of the ball especially in wet or rainy environments. In addition, the grooves also increase the grip feeling of the ball, and improve the user's stability and accuracy in catching, passing and other movements. The groove design on the surface of the ball patch surface not only improves the practicability of the ball, but also brings a more excellent experience for the ball game.
5. In the proposal of the invention, the foamed ball core and the ball surface patch layer are prepared by the supercritical foaming process, which greatly simplifies the procedure compared with the manufacturing process of the traditional inflatable balls. The supercritical foaming process can complete the foaming and molding of the material in a relatively short time has no need for complex inflating and deflating tests, significantly improving the production efficiency and reducing energy consumption and waste. Moreover, the simplified manufacturing process and the shortened manufacturing time directly result in the reduction of the required staff, and the supercritical foaming process with a higher degree of automation can reduce the dependence on manual operation, thereby reducing labor costs, and improving the stability and reliability of the production line.
6. The ball prepared in the proposal of the application has fixation properties (quantitative data), which means that the size, shape, performance and other parameters of the ball can be accurately controlled, being more in line with the requirements of the automated process, and making the entire production process smoother and more efficient.

### Brief Description of the Drawings

FIG. 1 is the schematic diagram for a profile structure of a ball structure in the embodiment 1.
FIG. 2 is the schematic diagram for a profile structure of a ball structure in the embodiment 2.
FIG. 3 is the schematic diagram for a profile structure of a ball structure in the embodiment 3.
FIG. 4 is the schematic diagram for a profile structure of a ball structure in the embodiment 4.

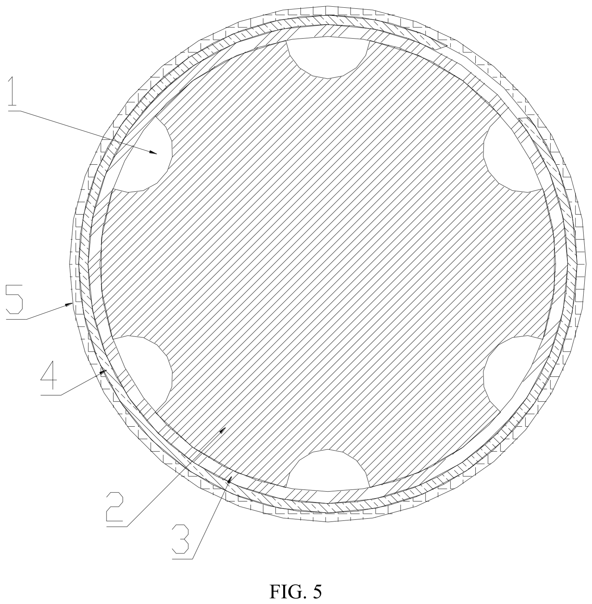

FIG. 5 is the schematic diagram for a profile structure of a ball structure in the embodiment 5.
FIG. 6 is the schematic diagram for a profile structure of a ball structure in the embodiment 6.
FIG. 7 is the SEM image of the foamed ball core obtained by SEM observation in the embodiment 1.
FIG. 8 shows the test equipment for resilience testing.
FIG. 9 is the schematic diagram of the roundness measuring instrument.

Reference signs: 1. Hollow cavity; 2. Foamed ball core; 211. Splicing body; 3. Reinforcing layer; 4. Ball surface patch layer; 5. Film layer.

### Detailed Description of the Invention

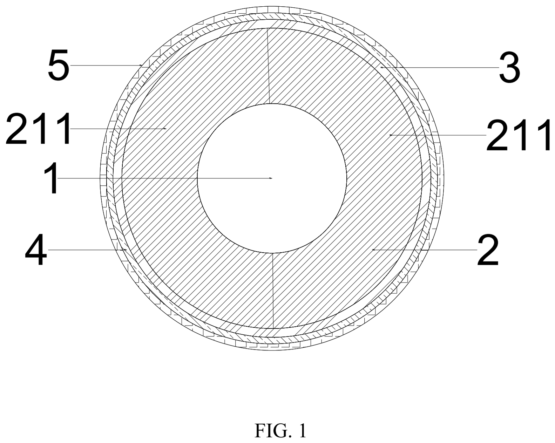

### Embodiment 1 (See FIG. 1):

In the embodiment, two bowl-shaped splicing bodies 211 are used, and the hollow cavity 1 is located inside the foamed ball core 2 after splicing, that is, located in the center of the foamed ball core 2; the two can be connected by bonding/hot melting; overall, the split design divides the foam ball core 2 into a plurality of splicing bodies 211, each of which can be molded separately. Compared with integrated molding, the split molding method is easier to control various parameters in the molding process, such as temperature, pressure, time, etc., thus reducing the difficulty in molding. The split design makes the demoulding and pick-up process easier. As each splicing body 211 can be separately demoulded and picked up, the problem of demoulding difficulty or pick-up damage caused by integrated molding is avoided.

Further, the reinforcing layer 3 is a non-woven or woven fabric, which is bonded to the periphery of the foamed ball core 2 by hot pressing/gluing. The woven fabric is a fabric with 20-count or 30-count or 40-count yarns.

In the embodiment, the reinforcing layer 3 is hot-pressed/glued to the periphery of the foamed ball core 2 through the non-woven or woven fabric, providing more excellent support and stability for the foamed ball core 2. This structural reinforcement enables the ball to better maintain the ball shape and integrity under impact of external forces, and extends the service life of the ball. The reinforcing layer 3 makes the foamed ball core 2 more durable and reduces the performance degradation due to continuous impact.

As another embodiment, the reinforcing layer 3 may be selected as a winding layer, on which adhesive or latex is provided, and the ball surface patch layer 4 is bonded with the winding layer through the adhesive or latex. As the further defined technical proposal of the invention, the winding layer is made of polyester-cotton yarn, cotton yarn, polyester yarn or nylon yarn by winding.

Specifically, the winding layer is made of yarns by winding and can form a tight and strong structure around the foamed ball core 2. This structure not only enhances the overall stability of the ball, and enables the ball to better disperse and resist the impact force when subjected to external forces, thus extending the service life of the ball. The materials used in the winding layer, such as poly-cotton yarn, cotton yarn, polyester yarn or nylon yarn, have high strength. These materials ensure that the winding layer has excellent durability and can maintain stable performance in the long time of use and frequent continuous impact.

Adhesive or latex is provided on the winding layer to firmly bond the ball surface patch layer 4 to the winding layer. This bonding method not only improves the bonding force between the ball surface patch layer 4 and the reinforcing layer 3, but also makes the ball better maintain the integrity of the whole structure under external forces. Moreover, the reinforcing layer 3 of the winding layer has greater flexibility and can adapt to the needs of different material combinations. For example, yarns of different materials and specifications can be selected to manufacture the winding layer to meet the ball performance requirements of different sports scenarios and athletes.

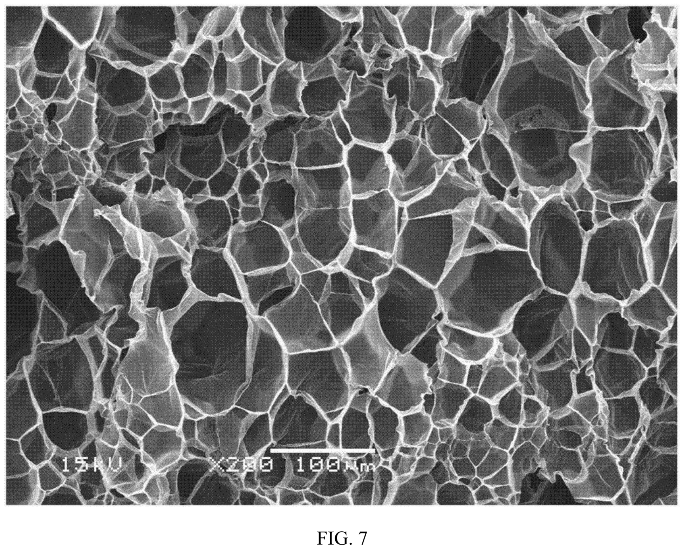

Specifically, the ball surface patch layer 4 is prepared by the supercritical foaming process. The special property of the supercritical process (such as carbon dioxide or nitrogen) at specific temperatures and pressures is utilized so that small irregular foam structures are formed in the foaming process of the materials (refer to FIG. 7 for SEM image of the foamed ball core 2 observed by SEM in the embodiment 1). This structure gives the ball surface patch layer 4 excellent elasticity, light weight and wear resistance. In the embodiment, the ball surface patch layer 4 may be made of at least one of a variety of materials, such as EVA, TPE, SBR, NBR, EPDM, SBL, POE, PE and TPR.

These materials have their own characteristics and can be selected according to the use and performance requirements of the ball. For example, materials such as polyurethane and TPU have excellent elasticity and restorability as well as low temperature impact resistance, and are suitable for the production of high-end sports balls. Meanwhile, the ball surface patch layer 4 is closely bonded to the surface of the reinforcing layer 3, forming the outer structure of the ball. This bonding method not only enhances the structural stability of the ball, but also enables the ball to better disperse and resist the impact force when subjected to external forces.

Moreover, the ball surface patch layer 4 can be composed of a plurality of patches bonded to the periphery of the foamed ball core 2, and the multi-patch bonding design can make the production process more flexible. Each ball surface patch layer 4 can be produced independently and then assembled together, which helps to achieve parallel production, thereby improving overall production efficiency. Meanwhile, the ball surface patch layer 4 can be produced separately, being easier to achieve large-scale production and reducing the cost of a single patch. This design also reduces material waste, further reducing costs.

In addition, the film layer 5 can be made of TPU, PVC, PU, TPE, TPR, PET, EVA and other materials. These materials have good flexibility, wear resistance and chemical resistance, and can protect the foamed ball surface layer 31 from the external environment. The film layer 5 not only improves the durability of the ball, but also gives the ball better waterproof, dustproof and anti-fouling properties. This allows the ball to maintain stable performance in wet or harsh operating environments. Meanwhile, as the outer layer of the ball surface patch layer 4, the film layer 5 can form a printing layer on the surface of the film layer 5 through painting, printing, thermal transfer printing, water transfer printing or cold transfer printing, pad printing and other technologies; the printing layer can carry rich visual elements, such as pattern, logo, brand identity, etc. to improve the appearance and personalization of the ball.

The hollow ball structure based on the supercritical process adopts the following specific production process:
Step 1: Material preparation: material of foamed ball core 2: TPU; material of reinforcing layer 3: polyester-cotton yarn is selected as the material of the winding layer; material of film layer 5: TPU film.
Step 2: Preparation of splicing body 211: divide the polyurethane material into two parts and respectively put them into two molds of the supercritical foaming equipment. Set the temperature of the supercritical foaming equipment to 120 degrees C, the pressure to 25 MPa and the foaming time to 30 minutes. Perform supercritical foaming treatment according to the set process parameters (as the supercritical foaming process is a process of the prior art, its process parameters and process flow are no longer discussed here; for details, refer to CN20241103A408.5 or CN202410925729.3, etc.), and obtain two hollow foamed semicircular balls with irregular small multi-foam structures. After foaming is completed, take out the hollow foamed semicircular balls and carry out the necessary cooling and setting treatment.
Step 3: bonding of splicing body 211: bond two splicing bodies 211 together using suitable adhesive (such as hot melt adhesive, polyurethane adhesive, etc.), to form a complete foamed ball core 2. Ensure the bonding joint is smooth and firm.
Step 4: production and bonding of reinforcing layer 3: use polyester-cotton yarn as the material of the winding layer, and wind according to the preset winding method and parameters. Use latex as a bonding agent, and tightly bond the winding layer to the outside of the foamed ball core 2.
Step 5: Preparation and bonding of ball surface patch layer 4: put the TPU material into the supercritical foaming equipment for supercritical foaming treatment, prepare multiple ball surface patch layers 4, and carry out necessary cooling and setting treatment after foaming is completed.
Step 6: If a pattern, logo or brand identity is required to be added to the surface of the ball, perform the printing or heat transfer printing on the surface/bottom of the TPU film.
Step 7: Bond the TPU film tightly to the outer surface of the ball surface patch layer 4 by using a hot-pressing process.
Step 8: Bond multiple ball surface patch layers 4 together using a suitable adhesive, and ensure that they fit tightly around the foamed ball core 2. Adjust the position during the bonding process to ensure that the roundness and size of the entire ball meet the requirements.
Step 9: Quality inspection and packaging: carry out the quality inspection of the completed hollow ball structure based on the supercritical process, package the qualified balls, and store them in an appropriate environment.

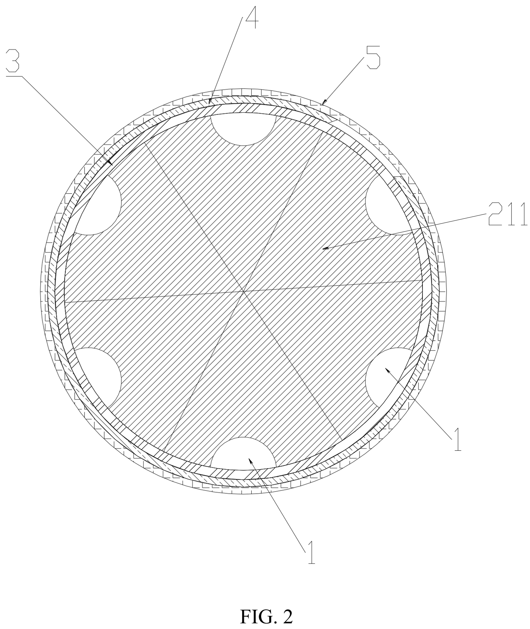

### Embodiment 2 (See FIG. 2):

The embodiment 2 is another embodiment of a hollow ball structure based on a supercritical process, which is similar in basic structure to the embodiment 1, but differs in the design and splicing of the foamed ball core 2. The specific description of the embodiment 2 is shown as follows:
Design and splicing of foamed ball core 2: In the embodiment 2, the foamed ball core 2 consists of six splicing bodies 211, which is different from the two splicing bodies 211 in the embodiment 1. The six splicing bodies 211 are closely bonded together by a specific connection method (hot melting) to form a complete foamed ball core 2. Moreover, the hollow cavity 1 in the embodiment 1 is located inside the foamed ball core 2, but the hollow cavity 1 in the embodiment 2 is located on the surface of the foamed ball core 2. This means that the six splicing bodies 211 are connected to jointly form the foamed ball core 2, while the hollow cavity 1 is distributed on the shell.

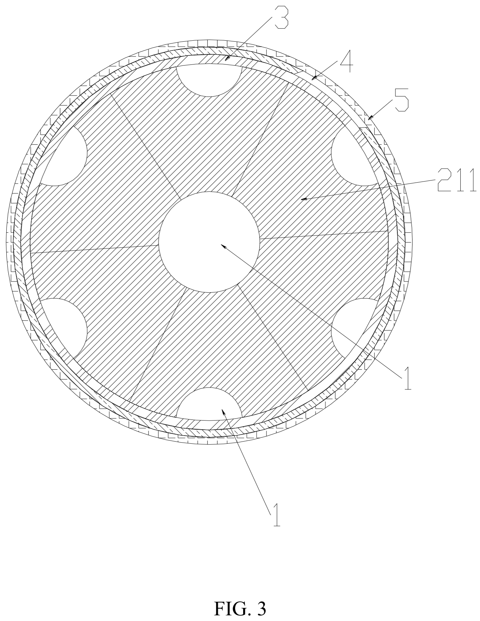

### Embodiment 3 (See FIG. 3):

In the embodiment 3, the six splicing bodies 6 are used to construct the foamed ball core 2. After splicing, the splicing bodies 6 not only form a hollow cavity 1 at the center of the foamed ball core 2, but also create an additional hollow cavity 1 on the surface, thus integrating the characteristics of the embodiment 1 (hollow cavity 1 inside) and 2 (hollow cavity 1 on the surface).

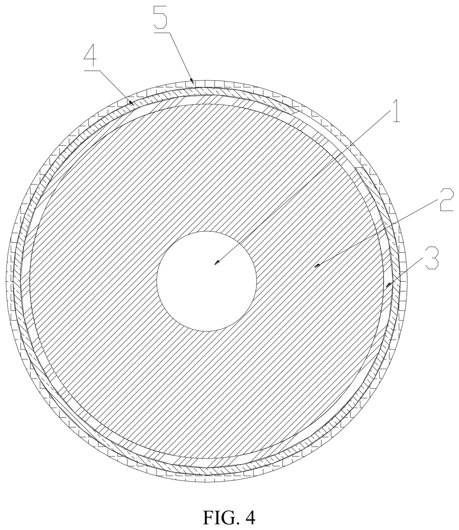

### See FIG. 4 for embodiment 4:

### Embodiment 4 (See FIG. 4):

In the embodiment 4, the foamed ball core 2 is manufactured by a supercritical integrated foaming process, and an internal hollow cavity 1 is formed naturally during the foaming process without additional splicing steps.

### Embodiment 5: Foamed ball core structure with a hollow cavity on the surface and no cavity inside

In the embodiment 5, we design a foamed ball core structure, which is characterized by a number of hollow cavities arranged on the surface of the foamed ball core to increase the grip feeling of the ball, while no cavity is specially designed inside the foamed ball core.

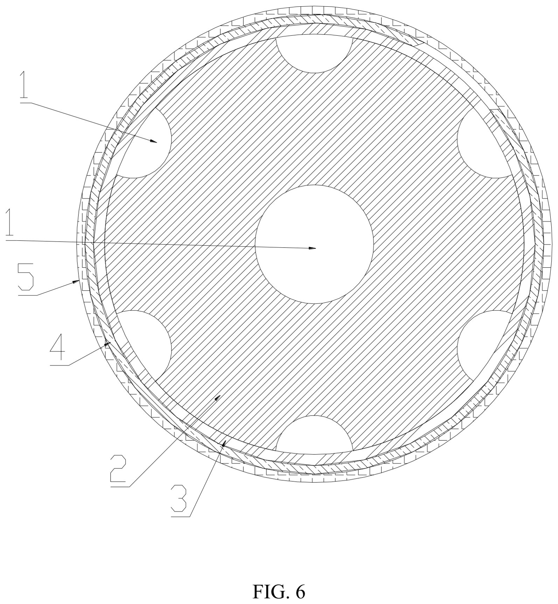

### Embodiment 6 (See FIG. 6):

In the embodiment 6, we adopt the integrated foaming process similar to the embodiments 4 and 5 to manufacture the foamed ball core 2, but make an innovation on this basis, that is, a plurality of hollow cavities 1 are also arranged on the surface of the foamed ball core 2, and a hollow cavity 1 is also arranged inside the foamed ball core 2.

To sum up, the above embodiments 1-6 have the following characteristics:
1. The foamed ball core 2 and the ball surface patch layer 4 are prepared by the supercritical foaming process, so that the ball can restore to its original shape more quickly under impact of external force. This improvement significantly improves the use experience and effect of the ball, and meets the requirements of athletes for high elasticity and high reaction speed of the ball in the continuous collision environment
2. The design of reinforcing layer 3 and ball surface patch layer 4 enhances the structural stability, wear resistance and appearance of the ball. The material prepared by the supercritical foaming process also has high durability and aging resistance, thus extending the service life of the ball and reducing the replacement frequency and use cost of the ball.
3. The ball of the invention is hollow and does not need to be inflated, thereby avoiding the tedious process that the traditional inflatable ball needs to be checked for gas pressure and inflated. This improvement not only improves the user's convenience, but also reduces the risk of ball damage due to improper maintenance. In addition, the hollow ball structure based on the supercritical process is also suitable for a variety of sports scenes and athlete needs, such as basketball, football, volleyball, etc., and has a wide range of application prospects.
4. Grooves can be arranged on the outermost surface of the ball surface patch layer 4 according to actual needs. The grooves are exquisitely designed and have multiple functions: on the one hand, they can significantly reduce the friction of the ball with the ground or air during rotation on the ground and in the air, making the ball smoother and improving the excellent performance of the motion trajectory of the ball; on the other hand, the grooves also have the function of facilitating drainage, and can effectively prevent water from affecting the maneuverability and trajectory of the ball especially in wet or rainy environments. In addition, the grooves also increase the grip feeling of the ball, and improve the user's stability and accuracy in catching, passing and other movements. The groove design on the surface of the ball patch surface not only improves the practicability of the ball, but also brings a more excellent experience for the ball game.

### Resilience experiment:

### I. Experimental objective

This experiment aims to verify whether the resilience of the hollow ball structure based on the supercritical process (hereinafter referred to as the "experimental ball") is better than that of the basketball or football (hereinafter referred to as the "control ball") of the same size in the market.

### II. Experimental materials and equipment

### 2.1 Experimental materials

Experimental group: The hollow ball structure based on the supercritical process in the embodiment 1 was used, with a diameter of 20.5 cm, the foamed ball core 2 was made of TPU foamed material, the patch ball surface layer 4 was also made of TPU foamed material, the reinforcing layer 3 was polyester-cotton yarn winding layer, and the film layer 5 was TPU film.

Control group: The inflatable football of the same size (20.5 cm) was randomly selected in the market, and may be made of polyvinyl chloride (PVC) or other rubber or plastic and rubber copolymer materials.

### 2.2 Experimental equipment

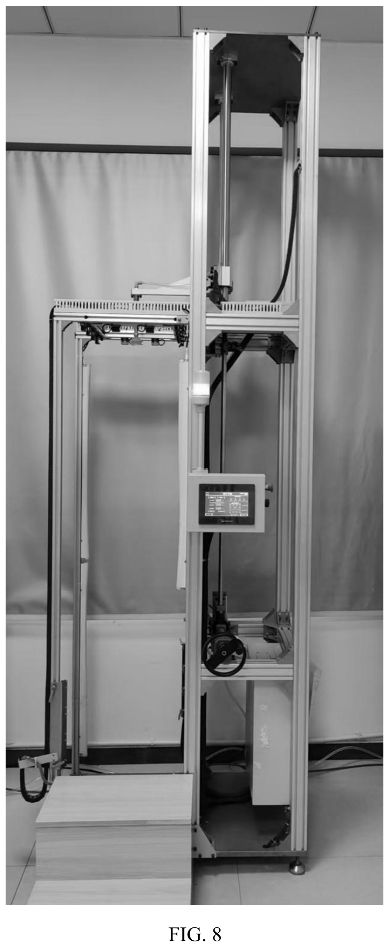

High precision rebound tester shown in FIG. 8: used to accurately measure the rebound height of the ball.

### III. Experimental procedure

### Preparation stage:

Ensure that the products in the experimental group and the control group are new and unused.

Use a height gauge to mark the height of 2.00 meters at the release point of each ball.

### Test stage:

Release each ball from the marked release point and let it fall free and rebound.

Use a rebound tester to measure the rebound height of the ball when rebounding to its highest point.

Repeat this process 10 times to obtain stable experimental data.

### Data recording and processing:

Record the rebound height in each test, and calculate the average rebound height and rebound rate (average rebound height/release height × 100%). Perform statistical analysis on the data to verify whether the difference between the two groups of data is significant.

### IV. Experimental data

| **Bounce Test Report for Experimental Group** | | | | | | | |
|---|---|---|---|---|---|---|---|
| **Test sample** | **Non-inflatable patch football** | **Type of ball** | **S4** | **Temperature (°C)** | **26°C** | **Humidity (%)** | **50%** |
| **Test date** | **December 7, 2024** | **Material** | **TPU** | **Code** | **Sample ball** | | |
| Circumference (MM) | 6439 MM | Weight (G) | 423g | Gas pressure (PSI) | / | Diameter (MM) | 205 |
| Inspection method | 1. Drop 10 times from a height of 2 meters onto the steel plate and record the average. | | | | | | |
| **Detection analysis** | | | | **Maximum: 1347 MM** | Minimum: 1289 MM | | |
| | Rebound average: 1307 MM | | | | | | |
| | Bounce values after test: 1289, 1321, 1347, 1289, 1303, 1321, 1289, 1304, 1297, 1314. (Unit: MM) | | | | | | |

| **Bounce Test Report for Control Group** | | | | | | | |
|---|---|---|---|---|---|---|---|
| **Test sample** | **Inflatable patch football** | **Type of ball** | S4 | **Temperature (°C)** | **26°C** | **Humidity (%)** | **50%** |
| **Test date** | **December 7, 2024** | **Material** | **TPU** | **Code** | **Sample ball** | | |
| Circumference (MM) | 643MM | Weight (G) | 420g | Gas pressure (PSI) | 12 | Diameter (MM) | 205 |
| Inspection method | 1. Drop 10 times from a height of 2 meters onto the steel plate and record the average. | | | | | | |
| **Detection analysis** | **Maximum: 1247 MM** | | Minimum: 1103 MM | | | | |
| | Rebound average: 1179 MM | | | | | | |
| | Bounce values after test: 1206, 1121, 1247, 1189, 1103, 1121, 1189, 1204, 1197, 1214. (Unit: MM) | | | | | | |

### V. Data analysis

It can be seen from the bounce test reports for the experimental group and the control group that the average rebound height of the experimental ball is 1307 MM and the average rebound rate is 65.35%; the average rebound height of the control ball is 1179 MM and the average rebound rate is 58.95%, proving that the resilience of the experimental ball is significantly better than that of the control ball.

### VI. Conclusion

This experiment verifies that the resilience of the hollow ball structure based on the supercritical process is significantly better than that of the common football in the market. The experimental data show that the average rebound rate and height of the experimental ball are higher than that of the control ball, and the difference is significant.

### Ball consistency performance test:

### I. Experimental objective

This experiment aims to verify the roundness consistency difference between the hollow ball structure based on the supercritical foaming process (experimental group) and the traditional inflatable ball (control group) after use (such as impact, extrusion, etc.) through a comparison test. The performance of the two balls in maintaining shape stability is evaluated by measuring and comparing the roundness changes before and after use.

### II. Experimental materials

Samples of experimental group: three hollow ball structures prepared by the supercritical patch technology, with a diameter of about 15 cm, numbered A1, A2 and A3.

Samples of control group: three traditional inflatable balls, with a diameter of about 15 cm, numbered B1, B2 and B3.

### III. Test equipment and tools

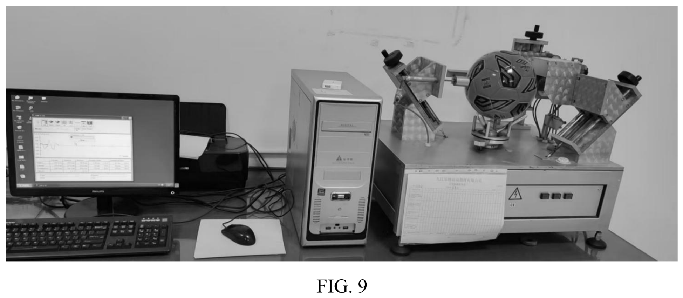

Durability tester (capable of simulating the impact, extrusion and other conditions of the ball in actual use) and roundness measuring instrument (see FIG. 9, with accuracy of 0.01 mm)

### IV. Experimental procedure

Pretreatment and initial measurement: Leave all balls at room temperature for 24 hours to eliminate the effect of temperature differences on the experimental results. Use a roundness measuring instrument to measure multiple evenly distributed points on each ball, and record the initial roundness data for each point (i.e. the distance from the surface of the ball to the center of the ball). Use simulation test: respectively place the balls for the experimental group and the control group in the durability tester, set the impact frequency, strength and test time, and simulate the impact and extrusion of the balls in actual use. The test time can be set according to the standard requirements, such as 4 hours, to ensure that the balls undergo adequate use simulation. Post-use measurement: after the test, take out and measure the balls again at the same measuring points on each ball using the roundness measuring instrument, and record the roundness data after use. Data recording and analysis: calculate the roundness change of each ball before and after use (that is, the difference between the roundness data after use and the initial roundness). Analyze and compare the differences in roundness consistency between the experimental group and the control group.

### V. Experimental data

### Initial roundness data (unit: mm):

| Ball No. | Measuring point 1 | Measuring point 2 | Measuring point 3 | Average roundness |
|---|---|---|---|---|
| A1 | 75.00 | 75.01 | 74.99 | 75.00 |
| A2 | 75.02 | 75.00 | 75.03 | 75.02 |
| A3 | 74.98 | 75.00 | 75.01 | 74.99 |
| B1 | 75.00 | 75.01 | 74.98 | 74.99 |
| B2 | 75.01 | 75.00 | 75.02 | 75.01 |
| B3 | 74.99 | 75.00 | 74.97 | 74.99 |

### Roundness data after use:

| Ball No. | Measuring point 1 | Measuring point 2 | Measuring point 3 | Average roundness | Roundness variation |
|---|---|---|---|---|---|
| A1 | 74.99 | 75.00 | 74.98 | 74.99 | -0.01 |
| A2 | 75.01 | 75.00 | 75.02 | 75.01 | -0.01 |
| A3 | 74.97 | 74.99 | 74.98 | 74.98 | -0.01 |
| B1 | 74.95 | 74.96 | 74.93 | 74.95 | -0.04 |
| B2 | 74.97 | 74.95 | 74.98 | 74.97 | -0.04 |
| B3 | 74.94 | 74.95 | 74.92 | 74.94 | -0.05 |

It can be concluded from the experimental data that the roundness consistency of the hollow ball structure prepared by the supercritical foaming process (experimental group) is better than that of the traditional inflatable ball (control group) after use simulation. The roundness variation of the ball in the experimental group is small, indicating that it can better maintain the shape stability under the conditions of impact and extrusion. This proves the effectiveness of the hollow ball structure prepared by the supercritical foaming process in improving the roundness consistency of the ball.

The above embodiments are only intended to describe the preferred embodiments of the invention, but not to limit the scope of the invention. Various variations and improvements made by ordinary engineering technicians in the field for the technical proposal of the invention without deviation from the design spirit of the invention shall fall within the scope of protection determined by the claims of the invention.

## Claims

1. A hollow ball structure based on a supercritical process, **characterized by** comprising a foamed ball core, a plurality of hollow cavities are formed inside or on the surface of the foamed ball core or inside and on the surface of the foamed ball core, a reinforcing layer is arranged outside the foamed ball core, a ball surface patch layer is bonded to the periphery of the reinforcing layer, and the foamed ball core or/and the ball surface patch layer are prepared by a supercritical foaming process.

2. The hollow ball structure based on the supercritical process according to claim 1, **characterized in that** the foamed ball core is at least one of polyurethane foamed ball core, EVA foamed ball core, TPE foamed ball core, SBR foamed ball core, NBR foamed ball core, EPDM foamed ball core, SBL foamed ball core, POE foamed ball core, PE foamed ball core, TPR foamed ball core, TPU foamed ball core and TPEE foamed ball core.

3. The hollow ball structure based on the supercritical process according to claim 1, **characterized in that** a film layer is bonded to the outer surface of the ball surface patch layer.

4. The hollow ball structure based on the supercritical process according to claim 1, **characterized in that** the foamed ball core is integrally foamed by the supercritical foaming process.

5. The hollow ball structure based on the supercritical process according to claim 1, **characterized in that** the foamed ball core is composed of a plurality of splicing bodies by means of splicing.

6. The hollow ball structure based on the supercritical process according to claim 1, **characterized in that** the reinforcing layer is a non-woven or woven fabric, which is bonded to the periphery of the foamed ball core by hot pressing or gluing.

7. The hollow ball structure based on the supercritical process according to claim 1, **characterized in that** the reinforcing layer is a winding layer, which is bonded with the periphery of the foamed ball core by gluing.

8. The hollow ball structure based on the supercritical process according to claim 1, **characterized in that** the ball surface patch layer is made of at least one of polyurethane, EVA, TPE, SBR, NBR, EPDM, SBL, POE, PE, TPR, TPU and TPEE and is foamed by the supercritical foaming process.

9. The hollow ball structure based on the supercritical process according to claim 8, **characterized in that** the thickness of the ball surface patch layer is 1 mm to 20 mm, and the thickness of the film layer is 0.1 mm to 3 mm, and the film layer is prepared from at least one of polyurethane, EVA, TPE, SBR, NBR, EPDM, SBL, POE, PE, TPR, TPU and TPEE.

10. The hollow ball structure based on the supercritical process according to claim 9, **characterized in that** an inner or outer layer of the film layer is provided with a printing layer by means of painting or printing or thermal transfer printing or water transfer printing or cold transfer printing or pad printing.

11. The hollow ball structure based on the supercritical process according to claim 1, **characterized in that** a groove is arranged on the surface of the ball surface patch layer.
